# EUROPÄISCHE PATENTSCHRIFT

(11) **EP 2 516 878 B1**
(45) Veröffentlichungstag und Bekanntmachung des Hinweises auf die Patenterteilung: **28.08.2013**
(21) Anmeldenummer: 10787394.5
(22) Anmeldetag: 01.12.2010
(51) Int. Cl.: F16D 48/06

(54) **VERFAHREN UND VORRICHTUNG ZUR LECKAGEPRÜFUNG IN EINEM AUTOMATISIERTEN ELEKTROHYDRAULISCHEN KUPPLUNGSSYSTEM IN EINEM KRAFTFAHRZEUG**
METHOD AND DEVICE FOR LEAK TESTING IN AN AUTOMATED ELECTROHYDRAULIC CLUTCH SYSTEM IN A MOTOR VEHICLE
PROCÉDÉ ET DISPOSITIF POUR TESTER DES FUITES DANS UN SYSTÈME D'ACCOUPLEMENT ÉLECTROHYDRAULIQUE AUTOMATISÉ SUR UN VÉHICULE

(30) Priorität: 22.12.2009 DE 102009055161
(43) Veröffentlichungstag der Anmeldung: 31.10.2012
(73) Patentinhaber: Robert Bosch GmbH, 70442 Stuttgart (DE)
(72) Erfinder: SCHNITZER, Manuel, 72667 Schlaitdorf (DE); SCHENK, Rene, 74081 Heilbronn (DE); SCHMOLL GENANNT EISENWERTH, Kaspar, 71665 Vaihingen-Horrheim (DE); KLYMENKO, Mykhaylo, 70839 Gerlingen (DE)
(86) Internationale Anmeldenummer: PCT/EP2010/068608
(87) Internationale Veröffentlichungsnummer: WO 2011/085862

(56) Entgegenhaltungen:
- DE-A1- 10 316 419
- DE-A1-102007 003 902
- DE-A1-102007 024 794
- DE-A1-102008 059 233
- FR-A1- 2 906 330

## Beschreibung

### Stand der Technik

Die Erfindung betrifft ein Verfahren zur Leckageprüfung in einem automatisierten elektrohydraulischen Kupplungssystem in einem Kraftfahrzeug, bei welchem ein elektromechanischer Aktuator über ein Hydraulikleitungssystem den Kupplungsweg einer Kupplung steuert sowie eine Vorrichtung zur Durchführung des Verfahrens.

Bei automatisierten Kupplungssystemen wird der Ausrückweg an der Kupplungsscheibe bestimmt, wobei über diesen Ausrückweg das Reibmoment an der Kupplung gesteuert wird. Die Kupplungsbetätigung erfolgt dabei durch einen, von einem Steuergerät angesteuerten elektromechanischen Aktuator, dessen Kräfte hydraulisch auf die Kupplung übertragen werden. Zur direkten Bestimmung des Weges an der ausrückenden Kupplungsscheibe ist an dieser, sofern möglich, eine Wegsensorik angeordnet.

Weiterhin sind indirekte Methoden zur Bestimmung des Weges an der ausrückenden Kupplungsscheibe bekannt, bei welchen in dem mechanischen Teil des elektromechanischen Aktuators absolute und/oder inkrementelle Wegaufnehmer platziert sind. Dabei ist die Nulllage des mechanischen Teils des elektromechanischen Aktuators in einer Ausführungsform durch einen mechanischen Anschlag festgelegt. Durch eine Betätigung des elektromechanischen Aktuators gegen den Anschlag und der Messung der aufgebrachten Stellenergie wird die Nulllage elektronisch erfasst und den weiteren Messungen zu Grunde gelegt.

Unter idealen Voraussetzungen, bei welchen von einer Inkompressibilität des Fluids und einem steifen System ausgegangen wird, wobei das System auch keine Leckagen aufweist, ist der Weg, welchen der mechanische Teil des elektromechanischen Aktuators zurücklegt, proportional zu dem Weg, welchen das Ausrücksystem zurücklegt. In realen Kupplungssystemen treten aber Störungen durch Luft, Temperatur, Elastizitäten und Leckagen auf, so dass die durch die Sensorik erfasste Position der Kupplung nicht der tatsächlichen Position der Kupplung entspricht.

Die durch Luft, Temperatur und Elastizitäten ausgelösten Störungen werden gewöhnlich durch Adaptionen kompensiert. Störungen durch Leckage können nicht dauerhaft kompensiert werden und müssen daher detektiert werden, um ein defektes System zu erkennen.

Die DE 10 2007 0039 02 A1 offenbart eine Vorrichtung und ein Verfahren zur Steuerung eines Kupplungssystems, bei welchem der Druck in dem hydraulischen System überwacht und aufgrund einer auftretenden charakteristischen Änderung des Drucks ein Diagnosesignal erzeugt wird.

### Offenbarung der Erfindung

Das erfindungsgemäße Verfahren zur Leckageprüfung eines automatisierten Kupplungssystems in einem Kraftfahrzeug mit den Merkmalen des Anspruchs 1 weist den Vorteil auf, dass ein defektes System zuverlässig und schnell erkannt wird und gegebenenfalls ausgetauscht werden kann. Dadurch, dass die Leckage im Kupplungssystem durch eine Druckmessung im elektromechanischen Aktuator detektiert wird, wird sichergestellt, dass durch eine Referenzierung der Druckmessung mit einer Kupplungskennlinie eine Verstimmung in der Wegbeziehung zwischen dem elektromechanischen Aktuator und der Kupplung schnell und zuverlässig detektiert wird. Eine solche Verstimmung führt dazu, dass der zum Öffnen und Schließen notwendige Weg der Kupplung nicht korrekt eingestellt wird. Durch das rechtzeitige Erkennen einer solchen Störung wird verhindert, dass die Kupplung über längere Zeit in einem schleifenden Zustand betrieben wird. Die frühzeitige Erkennung des Defektes verlängert somit die Lebensdauer der Kupplung. Auch fehlgeschlagene oder unkomfortable Kupplungsvorgänge infolge einer unzureichenden Einstellung des Wunschmomentes der Kupplung werden unterbunden. Die Dichtheit des hydraulischen Kupplungssystems ist eine Voraussetzung dafür, dass der Zusammenhang zwischen dem Weg des elektromechanischen Aktuators und dem gestellten Kupplungssystem reproduzierbar ist.

Erfindungsgemäß wird ein Druckmaximum des elektrohydraulischen Kupplungssystems ermittelt und anschließend ausgehend von dem Druckmaximum ein Startdruckpunkt bestimmt, welcher einen Ausgangspunkt für eine Druckmessung darstellt, wobei in einer vorgegebenen Zeit eine Druckänderung gemessen wird und die Druckänderung mit einem Schwellwert verglichen wird und bei Über-schreitung des Schwellwertes auf eine Leckage erkannt wird. Durch die Bestim-mung des Druckmaximums werden systemspezifische Unterschiede einzelner automatisierter Kupplungssysteme erfasst. Die Lage des Druckmaximums vari-iert mit der Ausführungsform und dem Systemzustand des Kupplungssystems. Damit wird sichergestellt, dass der für die Druckmessung als Ausgangspunkt gewählte Startdruckpunkt auch in einem Druckbereich liegt, der für die Prüfung geeignet ist. Das vorgeschlagene Verfahren ist besonders robust hinsichtlich der Erkennung von Leckagen, da es auf jede Veränderung im Kupplungssystem anspricht.

In einer Ausgestaltung wird die Druckänderung ausgehend von dem Startdruckpunkt bei einem vorgegebenen Stellweg des elektromechanischen Aktuators bestimmt. Ändert sich der Druck plötzlich ausgehend von dem Startdruckpunkt, kann bei einem intakten Drucksensor mit Sicherheit auf eine Leckage geschlossen werden.

In einer anderen Ausprägung wird der Startdruckpunkt in einem Bereich eines steilen Druckgradienten über dem Stellweg des elektromechanischen Aktuators gelegt. Damit können Druckänderungen infolge von Leckagen zuverlässig im Kupplungssystem gemessen und ausgewertet werden.

In einer Weiterbildung wird vor Messbeginn eine Kennlinie aufgenommen, welche den Druck des elektromechanischen Aktuators in Abhängigkeit vom Stellweg des elektromechanischen Aktuators darstellt, wobei der Startdruckpunkt ausgehend von dem mit der Kennlinie ermittelten Druckmaximum bestimmt wird. Anhand der Kennlinie lässt sich sehr einfach der Druckverlauf in dem hydraulischen Kupplungssystem erfassen, so dass sowohl das Druckmaximum als auch andere Bereiche der Kennlinie, welche für die Leckageprüfung besonders geeignet sind, detektiert werden können. Je nach Charakteristik der Leckage kann die Kennlinie des Kupplungssystems vom Offenhaltepunkt bis zu dem Punkt, wo die Kupplung komplett geschlossen ist, bei der Leckageprüfung durchfahren werden,

Ferner wird bei Ausbleiben eines lokalen Druckmaximums der Kennlinie auf ein defektes Kupplungssystem geschlossen. Die Kennlinie entspricht dabei einem Polynom 3. Ordnung und ergibt sich aus der Anpresskraftkennlinie einer Tellerfeder des Kupplungssystems. Größere Leckagen können somit sehr einfach festgestellt werden. Ein solches Kupplungssystem muss sofort ausgewechselt werden, da es nicht den Sicherheitsanforderungen im Kraftfahrzeug entspricht.

In einer Variante wird die vorgegebene Zeitdauer zur Bestimmung der Druckänderung variiert. Die Erfassung der Druckänderungen in verschiedenen Zeiträumen ermöglicht eine Optimierung der Leckageprüfung. Wird die Leckageprüfung in unterschiedliche Zeiträume unterteilt, verbessert sich die Genauigkeit des Prüfergebnisses und die Flexibilität der Prüfung wird erhöht.

Vorteilhafterweise wird während eines Hysteresesprungs der Kennlinie ein erster Zeitraum zur Bestimmung einer ersten Druckänderung festgelegt, während außerhalb des Hysteresesprungs der Kennlinie ein zweiter Zeitraum zur Bestimmung einer zweiten Druckänderung festgelegt wird, wobei der erste Zeitraum zur Bestimmung der ersten Druckänderung kleiner ist als der zweite Zeitraum zur Bestimmung der zweiten Druckänderung. Mit der Erfassung der ersten Druckänderung in einem kurzen Zeitraum wird durch eine Sofortprüfung festgestellt, ob das Kupplungssystem in Ordnung ist oder nicht. Die Erfassung der zweiten Druckänderung in dem längeren zweiten Zeitraum verifiziert die Prüfung der ersten Druckänderung und ist somit genauer.

In einer weiteren Ausgestaltung wird die erste Druckänderung während des Hysteresesprungs der Kennlinie gemessen, wobei bei der Überschreitung des Schwellwertes durch die erste Druckänderung eine Messung der zweiten Druckänderung während des zweiten Zeitraumes vorteilhafterweise entfällt. Somit ist eine rasche Klassifizierung des Kupplungssystems in in Ordnung bzw. nicht in Ordnung möglich, wie sie beispielsweise bei Bandendeprüfungen eingesetzt wird.

In einer anderen Variante wird nur die zweite Druckänderung während des zweiten Zeitraumes bestimmt, welche außerhalb des Hysteresesprunges der Kennlinie erfolgt. Damit wird eine wesentlich gründlichere Leckageprüfung durchgeführt, wie sie für Werkstätten oder den Kundendienst von Vorteil ist. Ein solches Verfahren kann aber auch vorteilhaft für Diagnosezwecke eingesetzt werden.

In einer Ausprägung erfolgt die Druckmessung im Stillstand des Fahrzeuges. Nur im Stillstand des Fahrzeuges ist eine vollständige Durchfahrung der Kennlinie des automatisierten Kupplungssystems sinnvoll möglich, bei welcher die Kupplung geöffnet und wieder geschlossen werden kann.

Eine Weiterbildung der Erfindung betrifft eine Vorrichtung zur Leckageprüfung in einem automatisierten elektrohydraulischen Kupplungssystem in einem Kraftfahrzeug mit den Merkmalen des Anspruchs 11, bei welchem ein elektromechanischer Aktuator über ein Hydrauliklei-tungssystem den Kupplungsweg einer Kupplung steuert. Um eine genaue Le-ckageprüfung des Kupplungssystems durchführen zu können, sind Mittel vor-handen, welche die Leckage im Kupplungssystem durch eine Druckmessung im elektromechanischen Aktuator detektieren. Dies hat den Vorteil, dass durch das rechtzeitige Erkennen einer solchen Störung verhindert wird, dass die Kupplung über längere Zeit in einen schleifendem Zustand betrieben wird. Die frühzeitige Erkennung des Defektes verlängert somit die Lebensdauer der Kupplung. Auch fehlgeschlagene oder unkomfortable Kupplungsvorgänge infolge einer unzurei-chenden Einstellung des Wunschmomentes der Kupplung werden unterbunden. Die Dichtheit des hydraulischen Kupplungssystems ist eine Voraussetzung dafür, dass der Zusammenhang zwischen dem Weg des elektromechanischen Aktuators und dem gestellten Kupplungssystem reproduzierbar ist.

Erfindungsgemäß ist ein Drucksensor in einem Hydraulikteil des elektromechanischen Aktuators angeordnet, welcher mit einer Steuereinheit zur Bestimmung einer Leckage des Kupplungssystems verbunden ist. Da es sich bei einem Drucksensor um eine baulich sehr kleine Einheit handelt, ist nur unwesentlich mehr Platz für diesen in dem elektromechanischen Aktuator erforderlich. Bau-konzeptliche Veränderungen des elektromechanischen Aktuators können somit entfallen.

In einer Weiterbildung sind der elektromechanische Aktuator und die Kupplung örtlich getrennt angeordnet und über mindestens eine, eine Hydraulikflüssigkeit enthaltende Leitung miteinander verbunden. Durch die räumliche Trennung von elektromechanischem Wandler und Kupplung lassen sich die einzelnen Komponenten wesentlich einfacher in dem baulichen Gesamtkonzept eines Fahrzeuges realisieren, da sie Platz sparend angeordnet werden können.

In einer Ausgestaltung ist die Kupplung als Trennkupplung ausgebildet, welche den Antriebsstrang des Fahrzeuges, welcher von einem Elektromotor angetrieben wird, mit einem Verbrennungsmotor verbindet oder entkoppelt. Solche Trennkupplungen kommen in Hybridfahrzeugen zum Einsatz und bilden dort ein zentrales Element für den Antrieb des Fahrzeuges.

Die Erfindung lässt zahlreiche Ausführungsformen zu. Eine davon soll anhand der in der Zeichnung dargestellten Figuren näher erläutert werden.

Es zeigt:
- Figur 1:: schematische Darstellung für ein als Parallelhybrid ausgeführtes Hybridfahrzeug
- Figur 2:: Prinzipdarstellung eines automatisierten Kupplungssystems
- Figur 3:: Druck-Weg-Kupplungskennlinie eines automatisierten Kupplungssystems
- Figur 4:: schematisches Ablaufdiagramm zur Leckageprüfung eines automatisierten Kupplungssystems
- Figur 5:: Druck-Zeit-Verlauf zur Erkennung einer Leckage in einem automatisierten Kupplungssystem

Gleiche Merkmale sind mit gleichen Bezugszeichen versehen.

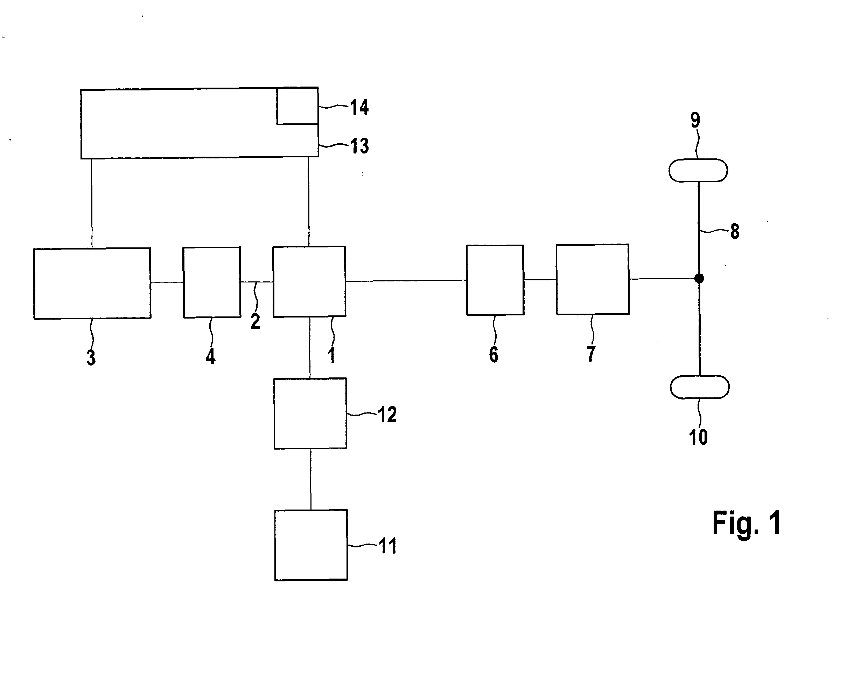

Figur 1 zeigt ein als Parallelhybrid ausgebildetes Hybridfahrzeug. In dieser Ausbildung ist ein Elektromotor 1 auf der Antriebswelle 2 eines Verbrennungsmotors 3 angeordnet. Der Verbrennungsmotor 3 ist über eine Trennkupplung 4 mit dem Elektromotor 1 verbunden. Der Elektromotor 1 führt auf ein Anfahrelement 6, welches mit einem Getriebe 7 verbunden ist. Das Getriebe 7 ist an eine Achse 8 geführt, an welcher die Räder 9, 10 angeordnet sind, die von dem beschriebenen Antriebsstrang angetrieben werden.

Der Elektromotor 1 wird von einer Hochvoltbatterie 11 mit Energie versorgt, welche über einen Inverter 12 mit dem Elektromotor 1 verbunden ist. Gesteuert werden der Elektromotor 1 und der Verbrennungsmotor 3 von einem Steuergerät 13. Das Steuergerät 13 umfasst einen Speicher 14, in welchem Kennlinien für verschiedene Betriebsparameter ablegt sind.

Es gibt verschiedene Betriebsbereiche, in welchen ein Parallelhybrid betrieben werden kann. Ein erster Betriebsbereich, in welchem die Trennkupplung 4 geöffnet ist und der Verbrennungsmotor 3 vom Antriebsstrang getrennt und automatisch gestoppt ist, wird als eDrive bezeichnet, da das Hybridfahrzeug rein elektrisch durch den motorisch betriebenen Elektromotor 1 und die in der Hochvoltbatterie 11 gespeicherte Energie angetrieben wird. Besteht ein Energiebedarf, welcher von dem Elektromotor 1 allein nicht mehr aufgebracht werden kann, wird der Verbrennungsmotor 3 automatisch gestartet und an den Antriebsstrang angekuppelt, was durch Schließung der Trennkupplung 4 erfolgt. Der Verbrennungsmotor 3 trägt nun zum Antrieb des Hybridfahrzeuges bei.

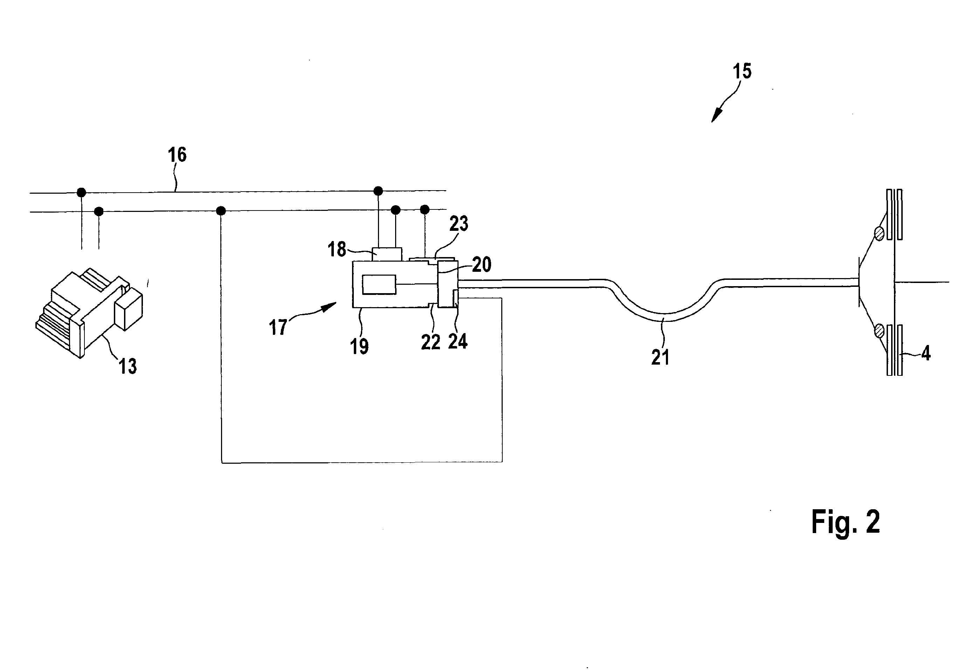

Das die Trennkupplung 4 enthaltende automatisierte Kupplungssystem 15 ist in Figur 2 näher dargestellt. Das Steuergerät 13 ist über ein Kommunikationsnetzwerk 16, welches beispielsweise als CAN-Bus ausgebildet sein kann, mit einem elektrohydraulischen Stellelement 17 verbunden. Dieses elektrohydraulische Stellelement 17 weist einen elektrischen Schaltkreis 18 und einen hydraulischen Geberzylinder 19 auf, wobei die von dem Steuergerät 13 ausgegebenen elektrischen Signale in eine Bewegung des hydraulischen Geberzylinders 19 des elektrohydraulischen Stellelementes 17 umgewandelt werden, so dass die in dem hydraulischen Geberzylinder 19 befindliche Hydraulikflüssigkeit mittels eines Kolbens 20 in dem hydraulischen Gesamtsystem bewegt wird, wobei der hydraulische Geberzylinder 19 mit einem hydraulischem Leitungssystem 21 verbunden ist. Das hydraulische Leitungssystem 21 verbindet das elektrohydraulische Stellelement 17 mit der Trennkupplung 4, welche beide räumlich getrennt im Fahrzeug angeordnet sind, wobei die hydraulischen Stellsignale des elektrohydraulischen Stellelementes 17 über das hydraulische Leitungssystem 21 an die Trennkupplung 4 weiter gegeben und von dieser ausgeführt werden.

Zum hydraulischen Gesamtsystem zählen der hydraulische Geberzylinder 19, ein in der Zeichnung nicht weiter dargestellter Nehmerzylinder, das aus starren und flexiblen Leitungen bestehende Leitungssystem 21 sowie nicht weiter differenzierte Anschlusstücke der Leitungen.

Das elektrohydraulische Stellelement 17 weist eine Ausgleichsöffnung 22 (Schnüffelloch) auf, die bei der Bewegung des Kolbens 20 des Geberzylinders 19 geöffnet oder verschlossen wird und im geöffneten Zustand mit einem nicht weiter dargestellten Ausgleichsbehälter des Hydrauliksystems in Verbindung steht. Bei der Bewegung des Kolbens 20 aus seiner Ruhestellung wird diese Ausgleichsöffnung 22 überfahren, wodurch die Verbindung zwischen dem Ausgleichsbehälter und dem hydraulischen Leitungssystem 21 unterbrochen wird. Die Trennkupplung 4 ist mechanisch derart konzipiert, dass sie drucklos geschlossen ist.

Darüber hinaus ist an dem hydraulischen Geberzylinder 19 ein Wegsensor 23 angeordnet, welcher den Weg des Kolbens 20 ausgehend von einer Nulllage bestimmt. Weiterhin misst ein Drucksensor 24 den Gesamtdruck in dem hydraulischen Gesamtsystem. Dieser Drucksensor 24 ist im Verdrängungsbereich des Kolbens 20 des Geberzylinders 19 angeordnet. Sowohl der Wegsensor 23 als auch der Drucksensor 24 sind über das Kommunikationsnetzwerk 16 mit dem Steuergerät 13 verbunden.

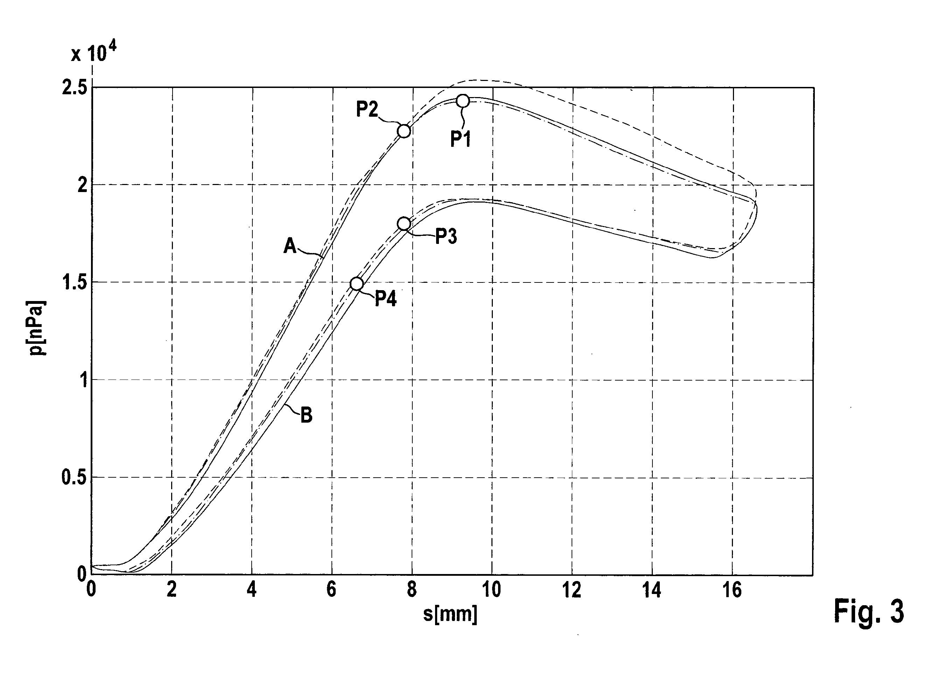

Um die verschiedenen Betriebszustände, welche bei der Verwendung eines automatisierten Kupplungssystems in einem Fahrzeug auftreten können, besser zu verdeutlichen, wird auf Figur 3 verwiesen. Eine Kennlinie stellt einen Zusammenhang zwischen dem im Geberzylinder 19 des elektrohydraulischen Stellgliedes 17 mittels des Drucksensors 24 gemessenen Druck und dem von dem Kolben 20 des Geberzylinders 19 verstellten Weg dar. Dies erfolgt bei einer Drehzahl n=0 U/min, also in einem unbelasteten Zustand der Trennkupplung 4. Wie daraus ersichtlich, ist die Ausgleichsbohrung 22 verschlossen. Der weitere Stellweg des Kolbens 20 hat einen Druckanstieg gemäß der Kennliniencharakteristik einer nicht weiter dargestellten Tellerfeder der Trennkupplung 4 zur Folge, wobei beim Öffnen der Trennkupplung 4 der Zweig A der Kennlinie aufgenommen wird, während beim Schließen der Trennkupplung 4 der Zweig B detektiert wird.

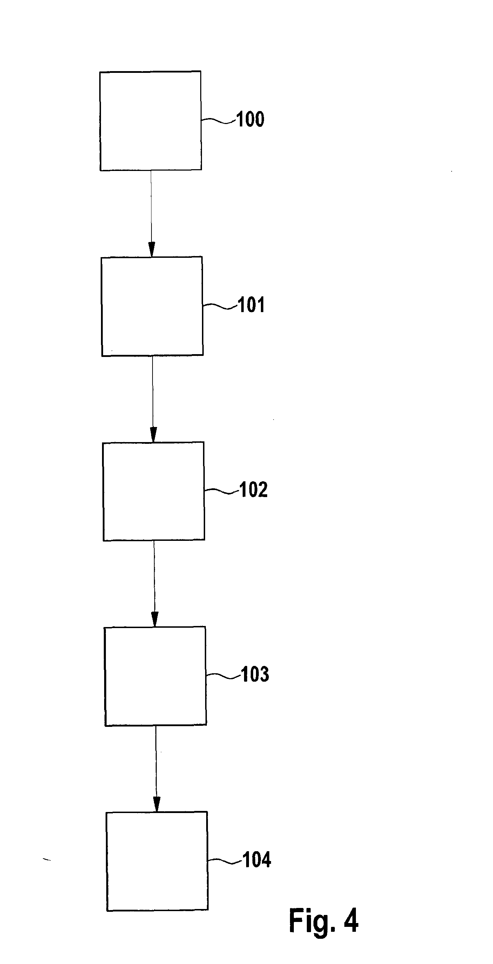

Die Leckageprüfung soll anhand von Figur 4 näher erläutert werden. Im Block 100 wird die Druck-Weg-Kennlinie des automatisierten Kupplungssystems bei einem stillstehenden Fahrzeug aufgenommen, bei welchem sich die Trennkupplung 4 in einem unbelasteten Zustand befindet. Die zunächst geschlossene Trennkupplung 4 wird im Block 101 geöffnet, wobei eine Hysterese der Tellerfeder der Trennkupplung 4 überwunden werden muss, so dass der Zweig A der Kennlinie durchfahren wird und ein Druckmaximum detektiert wird. Das Druckmaximum ist in Figur 3 als Punkt P1 gekennzeichnet. Wurde das automatisierte Kupplungssystem über einen längeren Zeitraum nicht betätigt, kann sogar ein Druckniveau oberhalb des Punktes 1 detektiert werden. Die Kennlinie des ersten Verfahrens der Trennkupplung 4 weicht im Druckverlauf zu nachfolgenden Betätigungen zu höheren Drücken hin ab.

Im Block 102 wird ein Startdruckpunkt P2 als Ausgangspunkt für die Leckagemessung festgelegt und angefahren. Dieser Startpunkt P2 (Figur 3) weist einen applizierbaren Abstand zum Druckmaximum P1 auf dem Zweig A auf, welcher der geöffneten Trennkupplung 4 entspricht. Tritt ein Volumenverlust innerhalb des hydraulischen Kupplungssystems durch Leckage oder Dichteänderung des Betriebsmediums ein, so wird im Block 103 eine Druckänderung detektiert, die auf der Kennlinie auf einer Vertikalen zwischen Punkt P2 und Punkt P3 in Figur 3 liegt. Ist der Hysteresesprung vollendet, führt ein weiterer Volumenverlust dazu, dass sich eine weitere Druckänderung entlang des Zweiges B der Kennlinie bis zum Punkt P4 einstellt, welche im Block 104 detektiert wird.

Alle in Figur 3 dargestellten Punkte sind exemplarisch gewählt und können in einer anderen Ausführungsform eine geometrisch andere Lage besitzen. Je nach Charakteristik der Leckage kann die gesamte Kennlinie der Trennkupplung 4 bei der Leckageprüfung durchfahren werden.

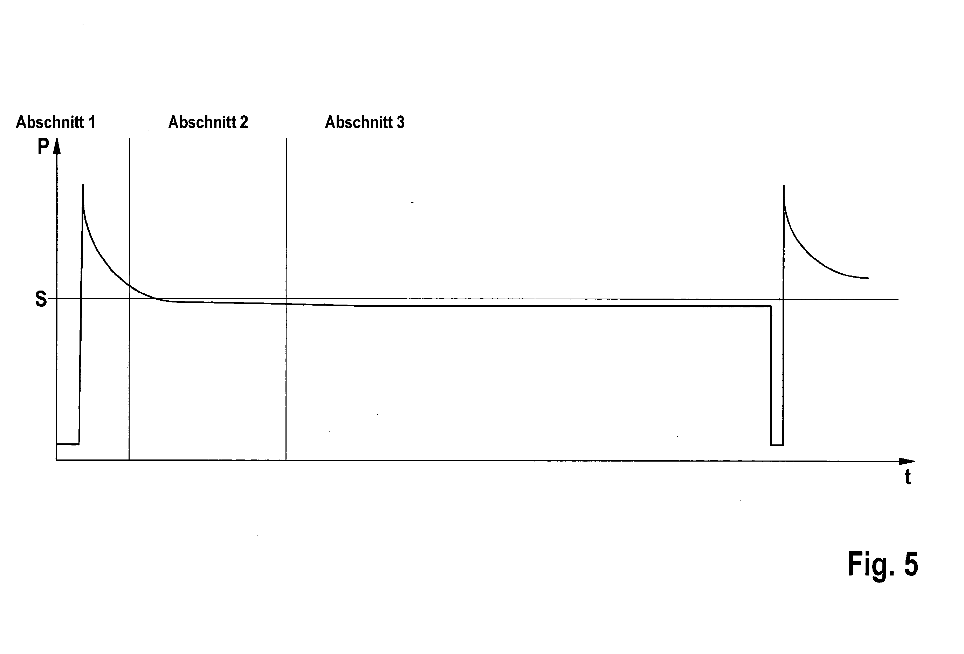

Der zeitliche Verlauf einer solchen Leckageprüfung ist in Figur 5 dargestellt. Abschnitt1 der Figur 5 zeigt eine relativ große Druckänderung bei einer geringfügigen Volumenänderung auf Grund des Hysteresesprunges der Trennkupplung 4 gemäß dem Druckunterschied zwischen Punkt P2 und P3 in Figur 3. Im Abschnitt 2 ist ein Wandern des Druckes entlang der Kupplungskennlinie dargestellt, was einer Duckänderung zwischen den Punkten P3 und P4 in Figur 3 entspricht. Im Abschnitt 3 ändert sich der Druck nicht mehr, da keine Volumenänderung mehr erfolgt.

Bei der in Figur 4 beschriebenen Leckageprüfung wurde davon ausgegangen, dass die Zeitdauer zur Messung der Druckänderungen immer konstant ist. Die Zeitdauer kann je nach gewünschtem Anwendungsfall aber auch variiert werden. So wird die Druckänderung Δp1, welche im Abschnitt 1 der Figur 5 gemessen wird, mit einer relativ kurzen Zeitdauer t1 gemessen. Die Druckänderung Δp1 wird mit einem ersten Druckänderungsschwellwert Sp1 verglichen. Ist die Druckänderung Δp1 größer als der Druckänderungsschwellwert Sp1 wird das Trennkupplungssystem als defekt eingestuft, da wahrscheinlich eine Leckage vorliegt. Ist die Druckänderung Δp1 kleiner als der Druckänderungsschwellwert Sp1 wird eine weitere Druckmessung im Abschnitt 2 durchgeführt, wobei die im Abschnitt 2 gemessene Druckänderung Δp2 über einen Zeitraum t2 durchgeführt wird, welcher wesentlich länger ist als der im Abschnitt 1 verwendete Zeitraum t1. Somit stellt die Auswertung der Druckänderung im Abschnitt 1 ein Schnellverfahren dar, in welchem nur der Hysteresesprung betrachtet wird, was besonders einfach bei einer Bandendeprüfung des automatisierten Kupplungssystems anwendbar ist. Die Auswertung der Druckänderung Δp2 im Abschnitt 2 durch Anfahren des Zweiges B der Kennlinie stellt somit ein gründlicheres Verfahren dar und ist besonders geeignet für die Anwendung in der Werkstatt und im Kundendienst. Auch bei der Prüfung im Abschnitt 2 wird die Druckänderung Δp2 mit einem zweiten Druckänderungsschwellwert Sp2 verglichen, um festzustellen, ob das Kupplungssystem einsatzfähig oder defekt ist. Die Druckänderungsschwellwerte Sp1 und Sp2 stellen applizierbare Größen dar.

## Patentansprüche

1. Verfahren zur Leckageprüfung in einem automatisierten elektrohydraulischen Kupplungssystem in einem Kraftfahrzeug, bei welchem ein elektromechanischer Aktuator (17) über ein Hydraulikleitungssystem (21) den Kupplungsweg einer Kupplung (4) steuert, wobei die Leckage im Kupplungssystem durch eine Druckmessung im elektromechanischen Aktuator (17) detektiert wird, **dadurch gekennzeichnet, dass** ein Druckmaximum (P1) des elektrohydraulischen Kupplungssystems ermittelt wird und anschließend ausgehend von dem Druckmaximum (P1) ein Startdruck (P2) bestimmt wird, welcher einen Ausgangspunkt für eine Druckmessung darstellt, wobei in einer vorgegebenen Zeit (t1,t2) eine Druckänderung (Δp1,Δp2) gemessen wird und die Druckänderung (Δp1,Δp2) mit einem Schwellwert (Sp1,Sp2) verglichen wird und bei Überschreitung des Schwellwertes (Sp1,Sp2) eine Leckage erkannt wird.

2. Verfahren nach Anspruch 1 **dadurch gekennzeichnet, dass** die Druckänderung (Δp1, Δp2) ausgehend von dem Startdruckpunkt (P2) bei einem vorgegebenen Stellweg (s) des elektromechanischen Aktuators (17) bestimmt wird.

3. Verfahren nach Anspruch 1 **dadurch gekennzeichnet, dass** der Startdruckpunkt (P2) in einem Bereich eines steilen Druckgradienten über dem Stellweg (s) des elektromechanischen Aktuators (17) gelegt wird.

4. Verfahren nach Anspruch 2 oder 3 **dadurch gekennzeichnet , dass** vor Messbeginn eine Kennlinie aufgenommen wird, welche den Druck (p) des elektromechanischen Aktuators (17) in Abhängigkeit vom Stellweg (s) des elektromechanischen Aktuators (17) darstellt, wobei der Startdruckpunkt (P2) ausgehend von dem mit der Kennlinie ermittelten Druckmaximum (P1) bestimmt wird.

5. Verfahren nach Anspruch 4 **dadurch gekennzeichnet, dass** bei Ausbleiben eines lokalen Druckmaximums (P1) auf ein defektes Kupplungssystem geschlossen wird.

6. Verfahren nach Anspruch 1 **dadurch gekennzeichnet, dass** die vorgegebene Zeitdauer (t1, t2) zur Bestimmung der Druckänderung (Δp1, Δp2) variiert wird.

7. Verfahren nach Anspruch 6 **dadurch gekennzeichnet, dass** während eines Hysteresesprungs der Kennlinie ein erster Zeitraum (t1) zur Bestimmung einer ersten Druckänderung (Δp1) festgelegt wird, während außerhalb des Hysteresesprungs der Kennlinie ein zweiter Zeitraum (t2) zur Bestimmung einer zweiten Druckänderung (Δp2) festgelegt wird, wobei der erste Zeitraum (t1) zur Bestimmung der ersten Druckänderung (Δp1) kleiner ist als der zweite Zeitraum (t2) zur Bestimmung der zweiten Druckänderung (Δp2).

8. Verfahren nach Anspruch 7 **dadurch gekennzeichnet, dass** die erste Druckänderung (Δp1) während des Hysteresesprungs der Kennlinie gemessen wird, wobei bei der Überschreitung des Schwellenwertes (Sp1) durch die erste Druckänderung (Δp1) eine Messung der zweiten Druckänderung (Δp2) während des zweiten Zeitraumes (t2) vorteilhafterweise entfällt.

9. Verfahren nach Anspruch 7 **dadurch gekennzeichnet, dass** nur die zweite Druckänderung (Δp2) während des zweiten Zeitraumes (t2) bestimmt wird, welche außerhalb des Hysteresesprungs der Kennlinie erfolgt.

10. Verfahren nach mindestens einem der vorhergehenden Ansprüche **dadurch gekennzeichnet, dass** die Druckmessung im Stillstand des Fahrzeuges erfolgt.

11. Vorrichtung zur Leckageprüfung in einem automatisierten elektrohydraulischen Kupplungssystem in einem Kraftfahrzeug, mit einem elektromechanischen Aktuator (17), der über ein Hydraulikleitungssystem (21) den Kupplungsweg einer Kupplung (4) steuert, wobei Mittel (13,24) vorhanden sind, welche die Leckage in dem Kupplungssystem durch eine Druckmessung im elektromechanischen Aktuator (17) detektieren, wobei die Mittel einen in einem Hydraulikteil (19) des elektromechanischen Aktuators (17) angeordneten Drucksensor (24) aufweisen, welcher mit einer Steuereinheit (13) zur Bestimmung einer Leckage des Kupplungssystems verbunden ist, **dadurch gekennzeichnet, dass** ein Druckmaximum (P1) des elektrohydraulischen Kupplungssystems ermittelt wird und anschließend ausgehend von dem Druckmaximum (P1) ein Startdruck (P2) bestimmt wird, welcher einen Ausgangspunkt für eine Druckmessung darstellt, wobei in einer vorgegebenen Zeit (t1,t2) eine Druckänderung (Δp1,Δp2) gemessen wird und die Druckänderung (Δp1,Δp2) mit einem zweiten Schwellwert (Sp1,Sp2) verglichen wird und bei Überschreitung des Schwellwertes (Sp1,Sp2) eine Leckage erkannt wird.

## Claims

1. Method for leak testing in an automated electrohydraulic clutch system in a motor vehicle, in which an electromechanical actuator (17) controls the clutch travel of a clutch (4) via a hydraulic line system (21), wherein the leak in the clutch system is detected by means of a pressure measurement in the electromechanical actuator (17), **characterized in that** a pressure maximum (P1) of the electrohydraulic clutch system is obtained and subsequently a starting pressure (P2), which constitutes a starting point for a pressure measurement, is determined on the basis of the pressure maximum (P1), wherein in a predefined time (t1, t2) a change in pressure (Δp1, Δp2) is measured and the change in pressure (Δp1, Δp2) is compared with a threshold value (Sp1, Sp2), and when the threshold value (Sp1, Sp2) is exceeded a leak is detected.

2. Method according to Claim 1, **characterized in that** the change in pressure (Δp1, Δp2) is determined on the basis of the starting pressure point (P2) given a predefined actuating travel (s) of the electromechanical actuator (17).

3. Method according to Claim 1, **characterized in that** the starting pressure point (P2) is positioned in a range of a steep pressure gradient over the actuating travel (s) of the electromechanical actuator (17).

4. Method according to Claim 2 or 3, **characterized in that** before the start of measurement a characteristic curve is recorded which represents the pressure (p) of the electromechanical actuator (17) as a function of the actuating travel (s) of the electromechanical actuator (17), wherein the starting pressure point (P2) is determined on the basis of the pressure maximum (P1) which is obtained with the characteristic curve.

5. Method according to Claim 4, **characterized in that** when a local pressure maximum (P1) fails to occur, it is inferred that the clutch system is defective.

6. Method according to Claim 1, **characterized in that** the predefined time period (t1, t2) is varied in order to determine the change in pressure (Δp1, Δp2).

7. Method according to Claim 6, **characterized in that** during a hysteresis jump of the characteristic curve a first time period (t1) for defining a first change in pressure (Δp1) is defined, while outside the hysteresis jump of the characteristic curve a second time period (t2) for defining a second change in pressure (Δp2) is defined, wherein the first time period (t1) for determining the first change in pressure (Δp1) is shorter than the second time period (t2) for determining the second change in pressure (Δp2).

8. Method according to Claim 7, **characterized in that** the first change in pressure (Δp1) is measured during the hysteresis jump of the characteristic curve, wherein when the threshold value (Sp1) is exceeded by the first change in pressure (Δp1) a measurement of the second change in pressure (Δp2) during the second time period (t2) is advantageously eliminated.

9. Method according to Claim 7, **characterized in that** only the second change in pressure (Δp2) is determined during the second time period (t2), which second change in pressure (Δp2) takes place outside the hysteresis jump of the characteristic curve.

10. Method according to at least one of the preceding claims, **characterized in that** the pressure measurement takes place in the stationary state of the vehicle.

11. Device for leak testing in an automated electrohydraulic clutch system in a motor vehicle, having an electromechanical actuator (17) which controls the clutch travel of a clutch (4) via a hydraulic line system (21), wherein means (13, 24) are provided which detect the leak in the clutch system by means of a pressure measurement in the electromechanical actuator (17), wherein the means have a pressure sensor (24) which is arranged in a hydraulic part (19) of the electromechanical actuator (17) and which is connected to a control unit (13) for determining a leak in the clutch system, **characterized in that** a pressure maximum (P1) of the electrohydraulic clutch system is obtained and subsequently a starting pressure (P2), which constitutes a starting point for a pressure measurement, is determined on the basis of the pressure maximum (P1), wherein in a predefined time (t1, t2) a change in pressure (Δp1, Δp2) is measured and the change in pressure (Δp1, Δp2) is compared with a second threshold value (Sp1, Sp2), and when the threshold value (Sp1, Sp2) is exceeded a leak is detected.

## Revendications

1. Procédé pour tester des fuites dans un système d'accouplement électrohydraulique automatisé placé dans un véhicule automobile, dans lequel un actionneur électromécanique (17) commande la course d'accouplement d'un accouplement (4) via un système de conduites hydrauliques (21), la fuite étant détectée dans le système d'accouplement par le biais d'une mesure de pression réalisée dans l'actionneur électromécanique (17), **caractérisé en ce qu'**un maximum de pression (P1) du système d'accouplement électrohydraulique est d'abord calculé, puis qu'une pression initiale (P2) est déterminée à partir du maximum de pression (P1) représentant un point de départ pour une mesure de pression, une variation de pression (Δp1, Δp2) étant mesurée pendant une durée prédéfinie (t1, t2) et la variation de pression (Δp1, Δp2) étant comparée à une valeur seuil (Sp1, Sp2) et une fuite étant détectée en cas de dépassement de la valeur seuil (Sp1, Sp2).

2. Procédé selon la revendication 1, **caractérisé en ce que** la variation de pression (Δp1, Δp2) est déterminée à partir du point de pression initial (P2) pour une course de placement (s) prédéfinie de l'actionneur électromécanique (17).

3. Procédé selon la revendication 1, **caractérisé en ce que** le point de pression initial (P2) est placé dans une région d'un gradient de pression abrupt via la course de placement (s) de l'actionneur électromécanique (17).

4. Procédé selon la revendication 2 ou 3 **caractérisé en ce qu'**avant le début de la mesure, une courbe caractéristique est enregistrée représentant la pression (p) de l'actionneur électromécanique (17) en fonction de la course de placement (s) de l'actionneur électromécanique (17), le point de pression initial (P2) étant déterminé à partir du maximum de pression (P1) calculé à l'aide de la courbe caractéristique.

5. Procédé selon la revendication 1, **caractérisé en ce qu'**on déduit que le système d'accouplement est défectueux en l'absence d'un maximum de pression (P1) local.

6. Procédé selon la revendication 1, **caractérisé en ce que** la durée prédéfinie (t1, t2) est changée pour déterminer la variation de pression (Δp1, Δp2).

7. Procédé selon la revendication 6, **caractérisé en ce que** pendant un saut d'hystérèse de la courbe caractéristique, une première durée (t1) est déterminée pour déterminer une première variation de pression (Δp1) tandis qu'en dehors du saut d'hystérèse de la courbe caractéristique, une deuxième durée (t2) est déterminée pour déterminer une deuxième variation de pression (Δp1), la première durée (t1) permettant de déterminer la première variation de pression (Δp1) étant inférieure à la deuxième durée (t2) permettant de déterminer la deuxième variation de pression (Δp2).

8. Procédé selon la revendication 7, **caractérisé en ce que** la première variation de pression (Δp1) est mesurée pendant le saut d'hystérèse de la courbe caractéristique, une mesure de la deuxième variation de pression (Δp2) étant avantageusement supprimée pendant la deuxième durée (t2) en cas de dépassement de la valeur seuil (Sp1) lors de la première variation de pression (Δp1).

9. Procédé selon la revendication 7, **caractérisé en ce que** seule la deuxième variation de pression (Δp2) est définie pendant la deuxième durée (t2) située à l'extérieur du saut d'hystérèse de la courbe caractéristique.

10. Procédé selon au moins l'une quelconque des revendications précédentes, **caractérisé en ce que** la mesure de pression est réalisée à l'arrêt du véhicule.

11. Dispositif pour tester des fuites dans un système d'accouplement électrohydraulique automatisé placé dans un véhicule automobile, avec un actionneur électromécanique (17) commandant la course d'accouplement d'un accouplement (4) via un système de conduites hydrauliques (21), des moyens (13, 24) étant prévus pour détecter la fuite dans le système d'accouplement par le biais d'une mesure de pression réalisée dans l'actionneur électromécanique (17), lesdits moyens comportant un capteur de pression (24) disposé dans une partie hydraulique (19) de l'actionneur électromécanique (17) et relié à une unité de commande (13) pour permettre de détecter une fuite du système d'accouplement, **caractérisé en ce qu'**un maximum de pression (P1) du système d'accouplement électrohydraulique est d'abord calculé, puis qu'une pression initiale (P2) est déterminée à partir du maximum de pression (P1) représentant un point de départ pour une mesure de pression, une variation de pression (Δp1, Δp2) étant mesurée pendant une durée prédéfinie (t1, t2) et la variation de pression (Δp1, Δp2) étant comparée à une seconde valeur seuil (Sp1, Sp2) et une fuite étant détectée en cas de dépassement de la valeur seuil (Sp1, Sp2).
